# FASCICULE DE BREVET EUROPEEN

(11) **EP 2 766 437 B1**
(45) Date de publication et mention de la délivrance du brevet: **22.04.2020**
(21) Numéro de dépôt: 12780230.4
(22) Date de dépôt: 10.10.2012
(51) Int. Cl.: C09D 5/00, C09D 167/08

(54) **PEINTURE, NOTAMMENT POUR MARQUAGE ROUTIER TEMPORAIRE, A BASE DE POLYMERES BIODEGRADABLES**
FARBE, INSBESONDERE FÜR TEMPORÄRE STRASSENMARKIERUNGEN MIT BIOLOGISCH ABBAUBAREN POLYMEREN
PAINT, IN PARTICULAR FOR TEMPORARY ROAD MARKINGS, CONTAINING BIODEGRADABLE POLYMERS

(30) Priorité: 11.10.2011 FR 1159192
(43) Date de publication de la demande: 20.08.2014
(73) Titulaire: GM Developpement, 94100 Saint-Maur-des-Fossés (FR); Sphera, 1140 Luxembourg (LU)
(72) Inventeur: MESSANT, Gérard, F-94100 Saint-Maur-des-Fosses (FR); ORTAIS, Yves, F-13240 Gemenos (FR)
(74) Mandataire: Schmidt, Martin Peter
(86) Numéro de dépôt international: PCT/FR2012/052301
(87) Numéro de publication internationale: WO 2013/054040

(56) Documents cités:
- FR-A1- 2 951 730

## Description

### Domaine technique de l'invention

L'invention concerne le domaine des peintures, et plus particulièrement le domaine des peintures pour marquage routier temporaire, i.e. des peintures utilisées notamment pour la délimitation temporaire des files et zones de circulation, des aires de stationnements, des passages à piétons et des carrefours. On appelle ces peintures couramment des « peintures routières ».

### Etat de la technique

On distingue deux types de peintures routières différentes, correspondant chacun à une finalité différente : les peintures routières permanentes, et les peintures routières temporaires. Les premières doivent être aussi durables que possible, les dernières doivent pouvoir être facilement retirées ou effacées tout en ayant une durabilité mécanique et chimique suffisante pendant la durée d'utilisation souhaitée, par exemple pendant une période de travaux routiers. Ces compositions peuvent être appliquées par différentes techniques, par exemple le peinturage au pinceau ou au rouleau ou la pulvérisation à chaud ou en solvant. Le produit appliqué sur la surface de la route peut ensuite sécher à l'air. On peut aussi appliquer une composition thermoplastique qui durcit par refroidissement.

D'une manière générale, il est souhaitable que les peintures routières ne renferment pas de produits toxiques pour l'environnement et soient de préférence même biodégradables, car ces peintures ou au moins leur constituants ou produits de dégradation se retrouveront tôt ou tard dans l'environnement. Cela est le cas en particulier des peintures routières temporaires, qui sont en général enlevées à l'aide d'un produit liquide qui les dissout et qui finira par s'évacuer soit dans le système d'évacuation des eaux usées soit dans la nature. Une alternative pour les peintures routières permanentes est constituée par les films adhésifs, dont la durabilité est parfois un élément limitant, notamment parce qu'ils ne résistent pas bien aux forces de cisaillement exercées par les pneumatiques. On peut également brûler les peintures permanentes à l'aide d'une torche, mais cela ne convient pas aux grandes surfaces et requiert beaucoup de main d'oeuvre. Il va de soi que dans le cas où la peinture temporaire est enlevée par rinçage, non seulement la peinture routière elle-même (ainsi que ses constituants et produits de dégradation) mais aussi le produit de rinçage doivent être non toxiques et de préférence biodégradables.

Ces peintures doivent également répondre à d'autres critères bien connus, et en particulier leur temps de séchage doit être minimal afin de ne pas entraîner une longue fermeture de la route après leur application par voie liquide. Elles doivent également être compatibles avec une multitude de revêtements routiers différents, notamment les différents nuances de goudron ou d'asphalte utilisés dans le monde, ainsi qu'avec les ciments et bétons utilisés à cette fin. Après leur application, elles doivent résister à l'abrasion, à la pluie, au froid, au sel ainsi qu'aux solvants organiques (essence, gasoil, huile, glycols) et d'autres produits liquides d'usage courant qui peuvent se répandre accidentellement sur la route. Par ailleurs, elles doivent permettre l'incorporation de divers agents destinés à leur conférer des propriétés spécifiques, tels que d'agents colorants et d'agents réfléchissants, d'agents améliorant leur tenue à l'abrasion, d'agents durcissants.

Les performances des peintures routières doivent satisfaire aux normes en vigueur dans le pays où elles seront utilisées. Il s'agit par exemple le la norme NF EN 1436+A1 (mars 2009) « Produits de marquage routier - Performances des marquages routiers pour les usagers de la route », de la norme NF EN 1824 (février 1999) « Produits de marquage routier - Essais routiers » et du Référentiel de Certification « Produits de signalisation horizontale » édité par AFNOR Certification (n° d'identification : NF331, n° de révision : 1, date de mise en application : 15/09/05).

D'une manière générale, ces peintures peuvent être mono-composants ou bi-composants. Elles comportent typiquement une base de résine ou de cire, une charge minérale destinée à renforcer leur résistance mécanique (notamment à l'abrasion), et une charge colorante (typiquement des pigments).

Le brevet US 2,933,989 (V. Duval d'Adrian) décrit une peinture routière à base de cires et résines dérivées de substances naturelles (colophane, huile de ricin hydrogéné, résine de copal, dammar). Ces produits présentant une faible résistance à la lumière ultraviolette, le brevet US 3,337,483 (Cataphote Corp.) propose une composition à base d'alkylcellulose et d'une résine obtenue par copolymérisation de styrène avec un ester ; cette composition contient des produits pétroliers. De même, le brevet US 3,523,029 (Cataphote Corp.) propose une autre composition comportant des acides dérivés de la colophane.

La demande de brevet FR 2 221 502 (Sumitomo Chemical Co.) décrit une composition thermoplastique pour marquage routier comportant une résine synthétique (telle que les résines de pétrole, les résines de mélanine, les résine phtaliques, les résines phénoliques, les résines d'époxy) ou naturelle (telle que la colophane) ; cette composition contient des produits pétroliers.

La demande de brevet WO 2008/076360 (Reichhold, Inc.) décrit une composition pour marquage routier comprenant une émulsion aqueuse riche en éléments solides d'une résine alkyde dérivée d'une huile naturelle, et un système de tensio-actifs composé d'un tensio-actif non ionique et d'un tensio-actif ionique. Cette résine alkyde peut être un copolymère avec une unité d'acryl et/ou de styrène. La résine décrite ici est constituée en partie d'un anhydride phtalique, nocif pour l'environnement.

D'une manière générale, on connaît également d'autres compositions de résines d'origine naturelle, par exemple celle décrite dans la demande de brevet EP 2 135 886-A1 (Colas et Valagro), qui est basée sur des dérivés d'une huile ou graisse d'origine naturelle comprenant des monoglycérides et/ou triglycérides, estérifiés par un poly(hydroxy acide). Ce produit n'a pas été envisagé comme base de peinture.

La résine alkyde décrite dans la demande de brevet FR 2 951 730 (Centre National de la Recherche Scientifique et D.V.I. Labo) a été envisagée comme base de revêtement de surface, y compris comme base dans une peinture de marquage routier. La résine décrite dans cette demande de brevet est intrinsèquement biodégradable et exclusivement composée de produits d'origine naturelle, notamment végétale. En revanche, ce document ne décrit pas de composition pour peinture de marquage routier entièrement composée de produits d'origine naturelle, et biodégradable.

D'autre part, aucun des documents mentionnés ci-dessus n'indiquent de méthode et de produit permettant d'enlever facilement la peinture lorsque celle-ci est utilisée pour un marquage temporaire, par exemple lors de travaux.

Ainsi, le problème que la présente invention cherche à résoudre est de proposer une nouvelle composition mono-composant de peinture pour marquage routier, qui répond à tous les critères fonctionnels des peintures routières habituellement utilisées (notamment en termes de résistance à l'abrasion), et qui est basée sur des composants organiques (résines) d'origine naturelle, c'est-à-dire disponibles sous la forme de produits naturels ou pouvant être synthétisés aisément en partant de produits naturels, et biodégradables, sous forme de produits non toxiques, dont la dispersion se fait dans une base aqueuse, et qui présente un séchage à l'air très rapide, et qui dégage peu de composés organiques volatiles (COV), et qui peut être enlevée par aspersion et rinçage avec un liquide biodégradable et non toxique.

### Objets de l'invention

Selon l'invention, le problème est résolu par une composition de peinture temporaire détachable avec un agent de détachement comprenant un agent tensioactif non-ionique et présentant un pH compris entre 3 et 6, caractérisé en ce que ladite peinture comprend :
- 10 à 50% (et de préférence 20 à 40%) en masse d'une résine alkyde d'origine naturelle en émulsion aqueuse, ladite résine alkyde présentant une masse molaire Mₚ comprise entre 3 000 g/mol et 100 000 g/mol, un indice de polydispersité Iₚ compris entre 1 et 20, une longueur d'huile comprise entre 20 et 40%, et un indice d'acide compris entre 16 et 35 ;
- au moins une charge minérale et/ou pigment ;
- de l'eau *quantum satis,* de préférence au moins 10% (et encore plus préférentiellement au moins 15%) en masse.

De préférence, les constituants organiques de ladite peinture routière sont à au moins 97% massiques, et de préférence à au moins 98% massiques, d'origine naturelle. Dans un mode de réalisation particulier, l'indice d'acide de ladite résine alkyde est compris entre 18 et 35, et encore plus préférentiellement entre 18 et 30.

La teneur en charges minérales et/ou pigments est avantageusement comprise entre 20% et 60% massiques.

Ladite peinture peut encore comprendre 0,1 à 1,5 % en masse d'une protéine animale, de préférence la caséine, et 0,1 à 0,2% de lessive de soude. Elle peut encore comprendre 0,1 à 1% en masse d'un épaississant, de préférence de l'éther de cellulose, et/ou 0,1 à 1 % (et de préférence 0,2 à 0,5%) en masse d'un agent biocide, de préférence d'origine végétale, et/ou 0,1 à 1% (et de préférence 0,5 à 1%) en masse d'un agent mouillant, de préférence du polyphosphate de sodium, et/ou 0,1 à 1 % en masse d'au moins un agent siccatif, de préférence un sel organométallique de fer.

Ladite peinture contient avantageusement un agent émulsionnant, à raison de 0,5% à 5 % en masse, qui peut être avantageusement choisi dans le groupe formé par la gomme arabique, les amidons modifiés, les protéines d'origine animale, la β-cyclodextrine.

Ses charges minérales et les pigments sont avantageusement choisis dans le groupe constitué par le carbonate de calcium, le kaolin, la silice, le corindon, l'oxyde de fer III et le dioxyde de titane.

La composition de peinture selon l'invention est mono-composant et peut être approvisionnée et stockée prêt à l'emploi ; elle se présente sous la forme d'une émulsion à base d'eau et peut être diluée à l'eau pour ajuster légèrement sa viscosité avant l'emploi.

La composition de peinture selon l'invention est formulée de manière à ce qu'elle ne dégage pas plus que 5 g/litre, et de préférence pas plus que 2 g/litre, de composés organiques volatiles dans les conditions d'essai de la norme ISO 11890-2:2006.

La peinture selon l'invention peut être utilisée comme peinture routière temporaire. Ainsi, un autre objet de l'invention est un procédé pour la formation d'un revêtement qui est détachable avec un agent de détachement qui comprend un tensioactif non-ionique et qui présente un pH compris entre 3 et 6, ledit procédé étant caractérisé en ce qu'une peinture selon l'invention est appliquée sur une surface, notamment la surface d'une route (c'est-à-dire une surface de goudron, béton, ciment), sur une surface de pierre ou céramique, ou encore sur une surface de verre (notamment dans le cas de son utilisation pour ombrager des serres horticoles), laquelle peinture forme après séchage un revêtement.

Un autre objet est l'utilisation de la peinture selon l'invention comme peinture routière temporaire, revêtement temporaire de serre horticole, peinture murale amovible ou renouvelable, revêtement de camouflage amovible, encre d'imprimerie, encre d'écriture, revêtement capillaire temporaire, vernis à ongles.

La peinture selon l'invention est détachable avec un dissolvant qui n'est ni toxique ni nocif pour l'environnement. Ledit dissolvant, qui est apte à enlever et détacher le revêtement formé par ce procédé après son application et séchage, est caractérisé en ce qu'il comprend au moins 20% en masse d'un agent tensioactif non ionique, de préférence un alkyl-xyloside dans lequel l'alkyle est en C4 à C6, forme encore un autre objet de l'invention.

Avantageusement, le pH du dissolvant est compris entre 3 et 6. Selon l'invention, ses constituants organiques ont été choisis de manière à ce qu'ils puissent être préparés à partir de produits d'origine naturelle, et ainsi, on préfère un mode de réalisation dans lequel ses constituants organiques sont à au moins 95% massiques, et de préférence à au moins 98% massiques, d'origine naturelle.

Un dernier objet de l'invention est un kit comprenant la peinture selon l'invention et le dissolvant, de préférence dans des conditionnements prêt à l'emploi et dans des proportions appropriées.

### Description détaillée

Nous entendons ici par « produit d'origine naturelle » tout produit d'origine végétale ou animale qui n'est pas d'origine fossile et qui ne contient pas de produit organique d'origine fossile, sachant que le terme « produit d'origine fossile » signifie tout produit organique issu du pétrole ou du charbon ou des dérivés du pétrole ou charbon. Un produit d'origine naturelle peut être distingué d'un produit similaire synthétisé à partir de matières premières fossiles par les méthodes décrites dans la norme ASTM D6866.

Par « indice de polydispersité », nous entendons de rapport Iₚ de la masse molaire moyenne en poids Mₚ sur la masse molaire moyenne en nombre Mₙ. Les paramètres Mₚ, Mₙ et Iₚ sont obtenus après chromatographie dite d'exclusion stérique d'une solution de la résine après son passage sur une colonne de gel.

Par « siccativité » d'une huile, nous entendons l'aptitude d'une huile à sécher en présence de l'oxygène de l'air ; cette aptitude augmente avec le nombre de liaisons insaturées présentes dans la structure de l'huile. Typiquement, une huile contenant des acides gras mono-insaturés présente un caractère semi-siccatif, alors qu'une huile contenant des acides gras poly-insaturés présente un caractère siccatif.

On entend ici par « agent émulsionnant » (ou « émulsifiant ») tout produit ou mélange de produits permettant ou favorisant la formation d'une émulsion.

Sauf indication contraire, les pourcentages caractérisant une composition sont des pourcentages massiques.

La composition selon l'invention comporte une résine alkyde, synthétisée à partir de produits d'origine naturelle et notamment à partir de produits végétaux, et présentant :
- un indice de polydispersité Iₚ compris entre 1 et 20 (de préférence entre 5 et 15),
- une masse molaire moyenne en poids Mp comprise entre 3 000 g/mol et 100 000 g/mol (de préférence entre 3 000 g/mol et 70 000 g/mol),
- un indice d'acide compris entre 16 et 35
- une longueur moyenne théorique en huile comprise entre 20% et 40%.

Avantageusement, sa viscosité dynamique mesurée à 80°C est comprise entre 10 et 50 dPas.

Une telle résine peut être synthétisée par polycondensation de produits de départ comprenant au moins un polyol, au moins un polyacide et au moins une huile et/ou un acide gras, l'huile étant choisie parmi les huiles végétales siccatives et/ou semi-siccatives, et l'acide gras étant choisi parmi les acides gras entrant dans la composition desdites huiles végétales siccatives et/ou semi-siccatives. Par ailleurs, le polyacide et le polyol sont (avantageusement) des produits d'origine naturelle.

Ces produits de départ peuvent être mélangés dynamiquement en continu à une température avantageusement comprise entre 180°C et 220°C jusqu'à la formation de la résine alkyde modifiée.

En particulier, les produits de départ peuvent comporter au mois une huile siccative choisie dans le groupe constitué par l'huile de lin, l'huile de bois de chine, l'huile oiticica, et/ou peuvent comporter au moins une huile semi-siccative choisie dans le groupe constitué par l'huile de soja, l'huile de tournesol, l'huile de carthame, l'huile de pépin de raisin, l'huile de carnauba, l'huile de calendula. Toutes ces huiles sont des produits d'origine naturelle.

L'acide gras entrant dans la composition d'une huile semi-siccative peut avantageusement être choisi dans le groupe constitué par l'acide oléique, l'acide linoléique et l'acide linolénique.

Le polyacide peut avantageusement être choisi parmi les oligomères d'acide gras végétal, l'acide succinique et l'acide adipique.

Lors de la préparation de la résine, on peut contrôler la masse molaire et l'indice de polydispersité par ajout d'un catalyseur bloqueur de chaîne ; ce catalyseur peut être un polyacide carboxylique, par exemple le poly(acide lactique), l'acide lactique ou l'acide gluconique.

Ces résines sont biodégradables et dégagent moins de 2 g/l de composés organiques volatils (COV), déterminé selon la norme ISO 11890-2. Elles sont en conformité avec les exigences de l'Ecolabel Européen selon la Décision 2009/544/CE de la Commission Européenne.

On peut préparer une émulsion aqueuse de cette résine alkyde, par exemple avec un agent émulsionnant d'origine fossile ou, de préférence, d'origine naturelle. Une proportion d'agent émulsionnant comprise entre 1% et 6% massiques (par rapport à la masse totale de l'émulsion) peut convenir. L'agent émulsionnant peut avantageusement être choisi dans le groupe constitué par la gomme arabique, les amidons modifiés (notamment l'amidon substitué par un groupement octényl succinate), la caséine, la gélatine et la β-cyclodextrine, qui sont tous des produits d'origine naturelle.

Dans le cadre de la présente invention, on peut notamment utiliser les résines et émulsions décrites dans les demandes de brevet WO 2011/051612 ou FR 2951 730 (Centre National de la Recherche Scientifique et D.V.I. Labo).

Une émulsion aqueuse de résine d'origine naturelle utilisable dans le cadre de la présente invention est commercialisée sous la dénomination Veomul ™ VT 098 par la société belge Vandeputte.

Selon la présente invention, la résine alkyde entre dans la composition de la peinture routière dans une proportion comprise entre environ 10% et 50% d'extrait sec, de préférence entre 10% et 30%, et encore plus préférentiellement entre 10% et 20%. A titre d'exemple, on peut utiliser pour la préparation de la peinture routière selon l'invention environ 15% à 45% massiques, et de préférence entre 15% et 40%, d'une émulsion aqueuse de résine avec un extrait sec d'environ 50% pour la préparation de la peinture routière selon l'invention. L'extrait sec de l'émulsion utilisée peut cependant être différent, par exemple compris entre 30% et 70% (de préférence entre 35% et 65%), et peut prendre les valeurs de 40%, 45%, 55%, 60% ou toutes les valeurs intermédiaires.

La composition selon l'invention comporte également des protéines d'origine animale pour assurer une meilleure cohésion et adhérence du film de peinture, et pour réguler sa rhéologie, de préférence en une teneur comprise entre 0,1% et 1,5% massiques. La caséine convient bien. Une faible quantité de lessive de soude permet d'améliorer l'incorporation des protéines (et notamment de la caséine) dans le mélange ; environ 0,1% à 0,2% massiques suffisent.

La composition comprend également un agent mouillant, de préférence du polyphosphate de sodium, qui assure la bonne dispersion des pigments et charges ainsi que la stabilité du produit en pot. Une teneur comprise entre 0,3 et 1,3% massiques convient, de préférence entre 0,5% et 1%.

Avantageusement, la composition comprend également un agent anti-mousse d'origine végétale, pour éviter la formation de mousse lors de la fabrication et lors de l'application de la peinture. Sa teneur est de préférence comprise entre 0,05% et 1,2% massiques. Le produit connu sous la marque commerciale BYK-1740 ™ peut convenir.

La composition selon l'invention comporte avantageusement un biocide, à savoir un produit qui déploie une activité fongicide et bactéricide. On peut utiliser un produit agréé pour l'usage cosmétique qui est de ce fait non-toxique, ou un produit pour peintures ; à ce titre, le produit connu sous la marque commerciale Mergal ® 723K peut convenir. Typiquement, on utilise une concentration comprise entre 0,05% et 0,5%.

La composition selon l'invention comporte également des charges minérales et/ou des pigments. Ils peuvent remplir plusieurs fonctions telles que : opacifiant, agent colorant, agent de texture.

Les charges minérales peuvent avoir une fonction de pigment, notamment de pigment blanc, mais on préfère ajouter d'autres pigments. D'une manière générale, les pigments utilisés dans le cadre de la présente invention sont de préférence des pigments minéraux non toxiques. On préfère à ce titre des pigments à base de fer ou de titane, deux métaux non toxiques. Il peut s'agir par exemple du TiO₂ (pigment blanc) et/ou de l'oxyde de fer (III) qui est un pigment jaune, ou encore d'autres pigments à base de fer (rouge, noir), notamment à base d'oxydes de fer.

Avantageusement, lesdites charges et pigments sont sélectionnés dans le groupe constitué par le dioxyde de titane, l'oxyde de fer (de couleur jaune, rouge ou noire), le kaolin, le corindon, le carbonate de calcium, la silice, les silices de précipitation, le sable, l'alumine, le talc, ou un mélange de ces produits.

Avantageusement on ajoute comme charge du kaolin et/ou de la silice, qui apportent du corps à la peinture et lui confèrent une certaine blancheur. En outre, la silice, qui est de préférence micronisée, renforce la dureté du film de peinture. Dans une réalisation avantageuse, on utilise à la fois le kaolin et la silice, en proportions massiques comprises entre 35 : 65 et 65 : 35, et de préférence en proportions massiques approximativement égales.

Les charges minérales peuvent aussi avoir une fonction anti-abrasive, pour apporter de la dureté au film de peinture, et pour prévenir son usure par frottement. Dans ce but, on peut utiliser par exemple du corindon, de préférence sous forme micronisée. La teneur en corindon peut par exemple être comprise entre 6% et 12% massiques.

Souvent, les peintures routières temporaires sont de couleur jaune ; dans ce cas, on utilise avantageusement de l'oxyde de fer jaune en tant que pigment minéral non-toxique. Ce pigment est utilisé de préférence sous forme micronisée. Une teneur comprise entre 3 et 7% massiques est avantageuse. Si une couleur blanche est souhaitée, on peut remplacer l'oxyde de fer par une autre poudre minérale blanche, par exemple par du kaolin, de la silice ou du corindon ; on préfère, si une peinture blanche durable est recherchée, du corindon, étant entendu que dans ce mode de réalisation où le corindon remplace l'oxyde de fer, la teneur totale en corindon peut donc être plus grande que les 12% massiques mentionnés ci-dessus, à savoir environ 20%.

On peut également ajouter un agent épaississant pour adapter la rhéologie de la peinture, notamment un éther de cellulose, tel que l'hydoxyéthylcellulose, pour éviter la sédimentation de la peinture ; une teneur comprise entre 0,1% et 0,5% massiques convient en général.

On peut également ajouter au moins un siccatif, qui accélère le séchage de la peinture. Il peut s'agir par exemple d'un produit comprenant un sel organométallique, de préférence à base de fer (qui est un métal de transition non-toxique). On peut utiliser à ce titre le produit Borchi ® Oxy-Coat commercialisé par la société OMG Borchers, en une teneur comprise entre 0,4 et 1% massiques.

Enfin, la composition comporte de l'eau, *quantum satis,* et typiquement à raison d'environ 15% à 30% massiques, et de préférence d'environ 19 à 25% massiques.

Un paramètre important pour la peinture routière selon l'invention est l'indice d'acide de la résine alkyde, qui doit être généralement compris entre 5 et 35. Plus précisément, l'indice d'acide doit être compris entre 10 et 30 pour une peinture temporaire détachable avec un dissolvant comprenant un agent tensioactif non-ionique et présentant un pH compris entre 3 et 6, et entre 5 et 15 pour une peinture permanente. Si l'indice d'acide de la résine utilisée dans la peinture routière temporaire est trop faible, elle ne pourra plus être dissoute dans des conditions acceptables par le dissolvant.

A titre d'exemple, on peut préparer une peinture routière temporaire avec la composition suivante (en pourcentages massiques):
- Émulsion de résine alkyde d'une longueur d'huile d'environ 40% avec un extrait sec de 50% : environ 36% (correspondant à un extrait sec total en résine alkyde de la peinture routière d'environ 18%) ;
- caséine : environ 0,5% ;
- lessive de soude : environ 0,2% ;
- agent anti-mousse à base d'huile végétale : environ 0,3% ;
- polyphosphate de sodium : environ 1% ;
- agent fongicide et bactéricide : environ 0,3% ;
- tensioactif non-ionique et/ou anionique : environ 0,7 % ;
- charges minérales : environ 38% dont :
   ∘ environ 13% de silice micronisé,
   ∘ environ 12% de kaolin,
   ∘ environ 8% corindon micronisé;
   ∘ environ 5% de pigment oxyde de fer jaune micronisé ;
- agent rhéologique (éther de cellulose) : environ 0,3% ;
- agent siccatif (sel de fer organométallique) : environ 0,7% ;
- eau : *quantum satis* (environ 22%).

Une telle peinture présente un extrait sec d'environ 58-60% (déterminé selon ISO 3251 (110°C, 1 heure)), une densité d'environ 1,21 à 1,23 (déterminée selon ISO 2811-1, à 23°C), un taux de COV de moins de 2 g/litre (déterminé selon ISO 11890-2), une viscosité en cône plat comprise entre 0,5 et 1 dPas à 25°C (déterminée selon ISO 284-1). Son séchage selon ASTM D 5895 se fait en environ 5 minutes (« hors poussière »). Un essai Taber selon ISO 7784-2 avec 40 à 100 mg sur roue CS 16/17 avec une charge de 500 g donne un résultat d'au moins 500 tours après une semaine de séchage.

La peinture selon l'invention peut être fabriquée par un procédé de dispersion. Dans un mode de réalisation, la première étape consiste à mélanger la résine avec la caséine, l'eau et la lessive de soude, la deuxième phase consiste à ajouter l'agent anti-mousse, l'agent mouillant et le fongicide, et enfin, on ajoute les charges et pigments minéraux et les autres additifs.

La peinture selon l'invention peut être utilisée comme peinture pour de nombreuses applications temporaires. Notamment, elle peut être utilisée comme peinture de marquage au sol pour les routes, les zones aéroportuaire, les supermarchés, comme peinture de camouflage (notamment dans le domaine militaire), comme peinture de décoration (notamment dans le domaine artistique et de l'évènementiel : cinéma, spectacle, théâtre, opéra), comme peinture murale amovible ou renouvelable. Elle peut être utilisée encore comme peinture temporaire de serres horticoles. Elle peut être utilisée en cosmétique, en tant que revêtement capillaire temporaire ou vernis à ongles. Par ailleurs, on peut l'utiliser comme encre pour l'imprimerie ou l'écriture, moyennant l'ajout de pigments appropriés. En cas de besoin, sa composition peut être adaptée à ces utilisations spécifiques, et en particulier aux modes d'application prévus.

A titre d'exemple, si une application par pulvérisation à distance est prévue (cas de l'application de la peinture sur des serres horticoles), on peut diluer davantage avec de l'eau. Pour une application sur des serres horticoles, il est inutile de prévoir les mêmes charges minérales résistant spécifiquement l'abrasion que pour une application routière pour laquelle la bonne résistance à l'abrasion est primordiale.

La peinture selon l'invention peut être utilisée comme peinture temporaire ou comme penture permanente. Comme indiqué ci-dessus, sa composition peut être ajustée pour résister plus ou moins longtemps à l'abrasion et/ou pour se dissoudre plus ou moins facilement selon les conditions naturelles, les conditions d'usage et les conditions de dissolution envisagées.

La peinture temporaire selon l'invention peut être dissoute à l'aide d'un dissolvant approprié, qui comprend au moins un surfactant non-ionique. Dans un mode de réalisation avantageux, le dissolvant comprend à titre de surfactant non-ionique au moins un alkyl-xyloside, à raison d'au moins 15% massiques et de préférence d'au moins 20% massiques. Le radical alkyle est de préférence en C₄, C₅ ou C₆. On préfère le butyl-xyloside et surtout l'amyl-xyloside (n° CAS 444-850-4) ; ces alkyl-xylosides peuvent être préparés à partir de biomasse, notamment à partir de sucres ligno-cellulosiques.

Dans un mode de réalisation avantageux on utilise un mélange comportant au moins un alkyl-glycoside avec un radical alkyle en C₄, C₅ ou C₆ (au moins 20% massiques), et de préférence du butyl- et/ou amyl-xyloside, ainsi qu'au moins un alkyl-glycoside en C₈ à C₁₂, à raison de moins de 5% massiques, et de préférence des décyl-glycosides (n° CAS 58846-77-8). Ces derniers peuvent être obtenus par réaction de glucose (pouvant être obtenu à partir d'amidon de maïs) avec du décanol (pouvant être obtenu à partir de noix de coco).

La composition de dissolvant peut encore comporter un acide α-hydroxylé, de préférence l'acide hydroxy-acétique (n° CAS 79-14-1), qui peut également être obtenu à partir de produits naturels (extraits de canne à sucre, de betteraves ou de raisin). La teneur en acide α-hydroxylé est avantageusement inférieure à 5% massiques.

La composition de dissolvant peut encore comporter un alcool, de préférence l'isopropanol, sa quantité est avantageusement inférieure à 5% massiques.

Ainsi, le dissolvant selon l'invention peut être réalisé de manière à ce qu'au moins 95%, voire au moins 98% massiques de ses constituants organiques soient d'origine naturelle. Par ailleurs, le dissolvant est biodégradable.

Le dissolvant comporte également de l'eau, *quantum satis.* Une proportion massique d'au moins 60%, et de préférence d'au moins 70%, est préférée. Le dissolvant a un caractère basique, et son pH peut être ajusté en ajoutant le cas échéant une base faible ou forte (par exemple de la lessive de soude, par exemple à raison de 0,5% à 2% massiques) ou de l'ammoniac. Avantageusement, le pH du dissolvant se situe entre 3 et 6, et encore plus avantageusement entre 4 et 6. On peut utiliser un pH plus bas, mais cela n'est pas avantageux car on souhaite éviter de laisser s'échapper des acides forts, même biodégradables, dans l'environnement.

Le dissolvant peut être appliqué par toute technique appropriée, par exemple par aspersion, pulvérisation, au rouleau. On le laisse agir pendant quelque temps, en fonction notamment de la température (typiquement une demi-heure à 15°C) afin de permettre sa pénétration dans la peinture puis on rince à l'eau.

Un mode d'application préféré du dissolvant se fait à l'aide d'un nettoyeur à haute pression, à une température d'au moins 50°C, de préférence d'au moins 65°C et encore plus préférentiellement d'au moins 75°C, à l'aide d'une buse à jet plat (de type « rasoir ») à une pression d'au moins 30 bars, et de préférence d'au moins 50 bars.

## Revendications

1. Peinture temporaire détachable avec un agent de détachement comprenant un agent tensioactif non-ionique et présentant un pH compris entre 3 et 6, **caractérisé en ce que** ladite peinture comprend :
- 10 à 50% en masse d'une résine alkyde d'origine naturelle en émulsion aqueuse, ladite résine alkyde présentant une masse molaire Mₚ comprise entre 3 000 g/mol et 100 000 g/mol, un indice de polydispersité lₚ compris entre 1 et 20, une longueur d'huile comprise entre 20 et 40%, et un indice d'acide compris entre 16 et 35, de préférence entre 18 et 35, et encore plus préférentiellement entre 18 et 30 ;
- au moins une charge minérale et/ou pigment ;
- de l'eau *quantum satis,*
étant entendu que les paramètres Mₚ et Iₚ sont obtenus par chromatographie d'exclusion stérique.

2. Peinture selon la revendication 1, **caractérisée en ce que** les constituants organiques de ladite peinture sont à au moins 97% massiques, et de préférence à au moins 98% massiques, d'origine naturelle.

3. Peinture selon l'une quelconque des revendications 1 ou 2, **caractérisée en ce que** la teneur en charges minérales et/ou pigments est comprise entre 20 et 60% en masse.

4. Peinture selon l'une quelconque des revendications 1 à 3, **caractérisée en ce qu'**elle comprend en outre 0,1 à 1,5 % en masse d'une protéine animale, de préférence la caséine, et 0,1 à 0,2% en masse de lessive de soude.

5. Peinture selon l'une quelconque des revendications 1 à 4 **caractérisée en ce que** les charges minérales et les pigments sont choisis dans le groupe constitué par le carbonate de calcium, le kaolin, la silice, le corindon, l'oxyde de fer III et le dioxyde de titane.

6. Peinture selon l'une quelconque des revendications 1 à 5 **caractérisée en ce qu'**elle comprend en outre un ou plusieurs des constituants suivants :
- 0,1 à 1% en masse d'un agent mouillant, de préférence du polyphosphate de sodium ;
- 0,1 à 1% en masse d'un épaississant, de préférence de l'éther de cellulose ;
- 0,1 à 1 % en masse d'un agent biocide, de préférence d'origine végétale ;
- 0,1 à 1% en masse d'un agent siccatif, de préférence un sel organométallique de fer.

7. Peinture selon l'une quelconque des revendications 1 à 6, **caractérisée en ce que** sa composition est telle qu'elle ne dégage pas plus que 5 g/litre, et de préférence pas plus que 2 g/litre de composés organiques volatiles dans les conditions d'essai de la norme ISO 11890-2:2006.

8. Procédé pour la formation d'un revêtement qui est détachable avec un agent de détachement qui comprend un tensioactif non-ionique et qui présente un pH compris entre 3 et 6, ledit procédé étant **caractérisé en ce qu'**une peinture selon les revendications 1 à 7 est appliquée sur une surface, notamment une surface de goudron, béton, ciment, pierre, céramique ou verre, laquelle peinture forme après séchage un revêtement.

9. Utilisation d'une peinture selon l'une quelconque des revendications 1 à 7 comme peinture routière temporaire, revêtement temporaire de serre horticole, peinture murale amovible ou renouvelable, revêtement de camouflage amovible, encre d'imprimerie, encre d'écriture, revêtement capillaire temporaire, vernis à ongles.

10. Kit comprenant la peinture selon l'une des revendications 1 à 7 et un dissolvant apte à enlever le revêtement formé par le procédé selon la revendication 8 après son application et séchage, ledit dissolvant étant **caractérisé en ce qu'**il comprend au moins 20% en masse d'un agent tensioactif non ionique, de préférence un alkyl-xyloside dans lequel l'alkyle est en C4 à C6, le pH dudit dissolvant étant de préférence compris entre 3 et 6 et les constituants organiques dudit kit étant de préférence à au-moins 95% massiques, et encore plus préférentiellement à au moins 98% massiques, d'origine naturelle.

## Patentansprüche

1. Temporäre Farbe, die mit einem Ablösemittel abgelöst werden kann, das ein nichtionisches Tensid umfasst und einen pH-Wert im Bereich zwischen 3 und 6 aufweist, **dadurch gekennzeichnet, dass** die Farbe umfasst:
- 10 bis 50 Masse-% eines Alkydharzes natürlichen Ursprungs in wässriger Emulsion, wobei das Alkydharz eine molare Masse Mₚ im Bereich zwischen 3 000 g/mol und 100 000 g/mol, einen Polydispersitätsindex Iₚ im Bereich zwischen 1 und 20, eine Öllänge im Bereich zwischen 20 und 40 % und eine Säurezahl im Bereich zwischen 16 und 35, vorzugsweise zwischen 18 und 35, und noch stärker bevorzugt zwischen 18 und 30 aufweist;
- mindestens einen anorganischen Füllstoff und/oder ein Pigment;
- Wasser *quantum satis,*
wobei die Parameter Mₚ und Iₚ durch sterische Ausschlusschromatographie erhalten werden.

2. Farbe nach Anspruch 1, **dadurch gekennzeichnet, dass** die organischen Bestandteile der Farbe zu mindestens 97 Masse-%, und vorzugsweise zu mindestens 98 Masse-% natürlichen Ursprungs sind.

3. Farbe nach einem der Ansprüche 1 oder 2, **dadurch gekennzeichnet, dass** der Gehalt an anorganischen Füllstoffen und/oder Pigmenten im Bereich zwischen 20 und 60 Masse-% liegt.

4. Farbe nach einem der Ansprüche 1 bis 3, **dadurch gekennzeichnet, dass** sie weiter 0,1 bis 1,5 Masse-% eines tierischen Proteins, vorzugsweise Casein, und 0,1 bis 0,2 Masse-% Natronlauge umfasst.

5. Farbe nach einem der Ansprüche 1 bis 4, **dadurch gekennzeichnet, dass** die anorganischen Füllstoffe und die Pigmente ausgewählt sind aus der Gruppe bestehend aus Calciumcarbonat, Kaolin, Siliciumdioxid, Korund, Eisen(III)oxid und Titandioxid.

6. Farbe nach einem der Ansprüche 1 bis 5, **dadurch gekennzeichnet, dass** sie weiter einen oder mehrere der folgenden Bestandteile umfasst:
- 0,1 bis 1 Masse-% eines Netzmittels, vorzugsweise Natriumpolyphosphat;
- 0,1 bis 1 Masse-% eines Verdickungsmittels, vorzugsweise Celluloseether;
- 0,1 bis 1 Masse-% eines bioziden Mittels, vorzugsweise pflanzlichen Ursprungs;
- 0,1 bis 1 Masse-% eines Trockenmittels, vorzugsweise eines metallorganischen Eisensalzes.

7. Farbe nach einem der Ansprüche 1 bis 6, **dadurch gekennzeichnet, dass** ihre Zusammensetzung derart ist, dass sie unter den Prüfbedingungen der Norm ISO 11890-2:2006 nicht mehr als 5 g/Liter, und vorzugsweise nicht mehr als 2 g/Liter flüchtige organische Verbindungen freisetzt.

8. Verfahren zur Bildung einer Beschichtung, die mit einem Ablösemittel abgelöst werden kann, das ein nichtionisches Tensid umfasst und das einen pH-Wert im Bereich zwischen 3 und 6 aufweist, wobei das Verfahren **dadurch gekennzeichnet ist, dass** eine Farbe nach den Ansprüchen 1 bis 7 auf eine Oberfläche, insbesondere eine Teer-, Beton-, Zement-, Stein-, Keramik- oder Glasoberfläche aufgetragen wird, welche Farbe nach dem Trocknen eine Beschichtung bildet.

9. Verwendung einer Farbe nach einem der Ansprüche 1 bis 7 als temporäre Straßenfarbe, temporäre Beschichtung für den Gartenbau, entfernbare oder erneuerbare Wandfarbe, entfernbare Tarnbeschichtung, Druckfarbe, Schreibtinte, temporäre kapillare Beschichtung, Nagellack.

10. Set, das die Farbe nach einem der Ansprüche 1 bis 7 und ein Lösungsmittel umfasst, das in der Lage ist, die über das Verfahren nach Anspruch 8 gebildete Beschichtung nach deren Auftragen und Trocknen zu entfernen, wobei das Lösungsmittel **dadurch gekennzeichnet ist, dass** es mindestens 20 Masse-% eines nichtionischen Tensids, vorzugsweise eines Alkylxylosids umfasst, bei dem es sich um ein C4- bis C6-Alkyl handelt, wobei der pH-Wert des Lösungsmittels vorzugsweise im Bereich zwischen 3 und 6 liegt und die organischen Bestandteile des Sets vorzugsweise zu mindestens 95 Masse-%, und noch stärker bevorzugt zu mindestens 98 Masse% organischen Ursprungs sind.

## Claims

1. Temporary paint capable of being stripped using a stripping agent comprising a non-ionic surfactant and having a pH that lies in the range 3 to 6, **characterised in that** said paint includes:
- 10 to 50 wt% of an alkyd resin of natural origin in an aqueous emulsion, said alkyd resin having a molar mass Mₚ that lies in the range 3,000 g/mol to 100,000 g/mol, a polydispersity index Iₚ that lies in the range 1 to 20, an oil length that lies in the range 20 to 40%, and an acid number that lies in the range 16 to 35, preferably in the range 18 to 35, and more preferably in the range 18 to 30;
- at least one mineral filler and/or pigment;
- water *quantum satis,*
it being understood that the parameters Mₚ and Iₚ are obtained by steric exclusion chromatography.

2. Paint according to claim 1, **characterised in that** the organic constituents of said paint are at least 97 wt%, and preferably at least 98 wt%, of natural origin.

3. Paint according to any one of claims 1 or 2, **characterised in that** the mineral filler and/or pigment content lies in the range 20 to 60 wt%.

4. Paint according to any one of claims 1 to 3, **characterised in that** it further comprises 0.1 to 1.5 wt% of an animal protein, preferably casein, and 0.1 to 0.2 wt% of caustic soda.

5. Paint according to any one of claims 1 to 4, **characterised in that** the mineral fillers and the pigments are selected from the group consisting of calcium carbonate, kaolin, silica, corundum, iron(III) oxide and titanium dioxide.

6. Paint according to any one of claims 1 to 5, **characterised in that** it further comprises one or more of the following constituents:
- 0.1 to 1 wt% of a wetting agent, preferably sodium polyphosphate;
- 0.1 to 1 wt% of a thickener, preferably cellulose ether;
- 0.1 to 1 wt% of a biocidal agent, preferably of plant origin;
- 0.1 to 1 wt% of a drying agent, preferably an organometallic iron salt.

7. Paint according to any one of claims 1 to 6, **characterised in that** the composition thereof is such that it releases no more than 5 g/litre, and preferably no more than 2 g/litre, of volatile organic compounds under the test conditions of ISO standard 11890-2:2006.

8. Method for forming a coating that is capable of being stripped using a stripping agent that comprises a non-ionic surfactant and that has a pH that lies in the range 3 to 6, said method being **characterised in that** a paint according to claims 1 to 7 is applied on a surface, in particular a tar, concrete, cement, stone, ceramic or glass surface, which paint forms a coating after drying.

9. Use of a paint according to any one of claims 1 to 7 as a temporary road paint, temporary greenhouse coating, removable or renewable wall paint, removable camouflage coating, printing ink, writing ink, temporary hair coating, or nail polish.

10. Kit comprising the paint according to one of claims 1 to 7 and a solvent capable of removing the coating formed by the method according to claim 8 after the application and drying thereof, said solvent being **characterised in that** it comprises at least 20 wt% of a non-ionic surfactant, preferably an alkyl-xyloside in which the alkyl is a C4-C6 alkyl, the pH of said solvent preferably lying in the range 3 to 6 and the organic constituents of said kit preferably being at least 95 wt%, and more preferably at least 98 wt%, of natural origin.
